(19) Europäisches Patentamt
European Patent Office
Office européen des brevets

(11) **EP 4 231 557 B1**

(12) **EUROPEAN PATENT SPECIFICATION**

(45) Date of publication and mention
of the grant of the patent:
**11.03.2026 Bulletin 2026/11**

(21) Application number: **21885276.2**

(22) Date of filing: **28.10.2021**

(51) International Patent Classification (IPC):
*H04L 27/26* (2006.01)   *H04L 25/03* (2006.01)
*H04L 1/00* (2006.01)   *H04L 1/08* (2006.01)

(52) Cooperative Patent Classification (CPC):
**H04L 1/08; H04L 1/0069; H04L 25/03821;
H04L 27/2602;** H04L 1/0047

(86) International application number:
**PCT/CN2021/127172**

(87) International publication number:
**WO 2022/089549 (05.05.2022 Gazette 2022/18)**

(54) **PREAMBLE PUNCTURE TRANSMISSION METHOD AND RELATED APPARATUS**

PRÄAMBELPUNKTIONSÜBERTRAGUNGSVERFAHREN UND ZUGEHÖRIGE VORRICHTUNG

PROCÉDÉ DE TRANSMISSION DE PERFORATION DE PRÉAMBULE ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2020 CN 202011195365**

(43) Date of publication of application:
**23.08.2023 Bulletin 2023/34**

(60) Divisional application:
**26153702.1**

(73) Proprietor: **Nokia Technologies Oy
02610 Espoo (FI)**

(72) Inventors:
• **SHEN, Xuqiang
Shenzhen, Guangdong 518129 (CN)**
• **YU, Jian
Shenzhen, Guangdong 518129 (CN)**
• **PAN, Jinzhe
Shenzhen, Guangdong 518129 (CN)**

(74) Representative: **Richardt Patentanwälte PartG
mbB
Wilhelmstraße 7
65185 Wiesbaden (DE)**

(56) References cited:
**WO-A1-2018/152224     WO-A1-2020/175785
CN-A- 110 035 027     CN-A- 111 654 867
US-A1- 2020 037 288**

• **DENG CAILIAN ET AL: "IEEE 802.11be Wi-Fi 7:
New Challenges and Opportunities", vol. 22, no.
4, 3 August 2020 (2020-08-03), pages 2136 - 2166,
XP055911229, Retrieved from the Internet
<URL:https://arxiv.org/pdf/2007.13401.pdf> DOI:
10.1109/COMST.2020.3012715**

Description

## TECHNICAL FIELD

This application relates to the field of wireless communication technologies, and in particular, to a preamble puncture transmission method and a related apparatus.

## BACKGROUND

US2020/037288A1 describes a station (STA) and method of communication. It is described that the STA may be included in a first plurality of STAs affiliated with a first multi-link logical entity (MLLE). It is described that a plurality of links may be established between the first MLLE and a second MLLE, wherein the second MLLE may be affiliated with a second plurality of STAs. It is described that the STA may receive a first subset of a sequence of MAC protocol data units (MPDUs). It is described that a second subset of the sequence of MPDUs may be transmitted by another STA of the first plurality of STAs. It is described that the STA may transmit a block acknowledgement (BA) frame that includes: a number of BA bitmaps, configurable to values greater than or equal to one; and BA control information for each of the BA bitmaps.

With development of a wireless local area network (wireless local area network, WLAN) communication standard, a WLAN communication standard starts from IEEE 802.11a/g, and develops to current IEEE 802.11ax (referred to as Wi-Fi 6 by the Wi-Fi Alliance, and also referred to as a high efficiency wireless (high efficiency wireless, HEW) standard) and IEEE 802.11be (referred to as Wi-Fi 7 by the Wi-Fi Alliance, and also referred to as an extremely high throughput (extremely high throughput, EHT) standard). Accordingly, a transmission bandwidth and a quantity of space-time streams allowed by the WLAN communication standard gradually change. A bandwidth develops from initial 20 MHz to current 160 MHz, and even larger, for example, 320 MHz. A WLAN system expects to obtain a higher transmission rate by using a larger bandwidth.

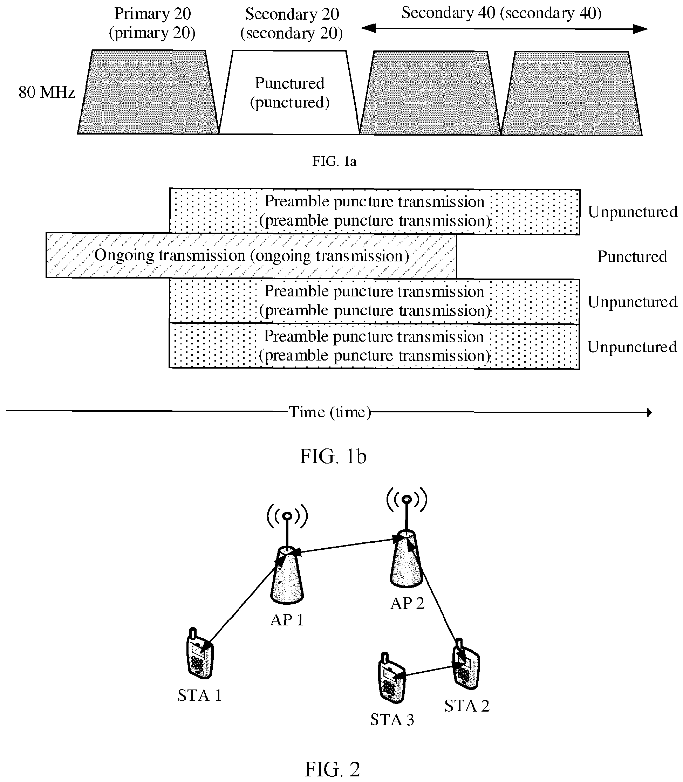

Before 802.11ax, all data packets (or referred to as physical layer protocol data units (physical layer protocol data unit, PPDU)) occupy consecutive channels. However, some channels cannot be used for some special reasons within a period of time or specific time. For example, there is a radar signal. In an unlicensed spectrum, if a WLAN user detects the radar signal, the WLAN user needs to proactively avoid the radar signal. Alternatively, there is an authorized user. On some specific channels, there may be an authorized user. If a WLAN user discovers the authorized user, the WLAN user also needs to proactively avoid the authorized user. Therefore, when some channels cannot be used within a period of time or specific time, a preamble puncture (preamble puncture) transmission method is proposed in 802.11ax. According to the method, a transmit end can still transmit a PPDU when some 20 MHz subchannels are in a busy state. In addition to a basic bandwidth mode, a preamble puncture mode is further introduced to a high efficient multi-user PPDU (high efficient multi-user PPDU, HE MU PPDU) in 802.11ax. A preamble part presents a nonconsecutive state. A description on a spectrum is shown in FIG. 1a. FIG. 1a is a schematic diagram of a frequency domain in a preamble puncture technology. As shown in FIG. 1a, a second 20 MHz sub-channel (namely, a secondary 20 MHz channel) of an 80 MHz bandwidth is punctured and cannot be used. However, a first 20 MHz sub-channel, a third 20 MHz sub-channel, and a fourth 20 MHz sub-channel that are not punctured can still be used. FIG. 1b is a schematic diagram of a time domain in the preamble puncture technology. As shown in FIG. 1b, when preamble puncture transmission starts, data is already transmitted on a punctured channel.

Therefore, in a preamble puncture scenario, a symbol transmitted on a puncture transmission channel (namely, a channel that may be used during preamble puncture transmission) is interfered with by a symbol transmitted on a punctured channel (namely, a channel that cannot be used during preamble puncture transmission).

## SUMMARY

Embodiments of this application provide a preamble puncture transmission method and a related apparatus, to reduce interference caused by a symbol transmitted on a punctured channel to a symbol transmitted on a puncture transmission channel, and improve decoding performance of a receive end.

Appended claim 1 defines a preamble puncture transmission method. Appended claim 6 defines a communication apparatus. Appended claim 7 defines a computer-readable storage medium. Appended claim 8 defines a computer program product. The invention and its scope of protection are defined by these claims. The following aspects and implementations of the summary provide examples of how technical subject matters can be combined.

Advantageous embodiments are described in the dependent claims.

According to embodiments of this application, interference caused by a symbol transmitted on a punctured channel to a symbol transmitted on a puncture transmission channel can be reduced, and decoding performance of a receive end can be improved.

**BRIEF DESCRIPTION OF DRAWINGS**

To describe technical solutions in embodiments of this application more clearly, the following briefly describes accompanying drawings used for describing embodiments.

FIG. 1a is a schematic diagram of a frequency domain in a preamble puncture technology;

FIG. 1b is a schematic diagram of a time domain in a preamble puncture technology;

FIG. 2 is a schematic diagram of an architecture of a wireless communication system, in which embodiments of this application are applied;

FIG. 3a is a schematic diagram of a structure of an access point according to an embodiment of this application;

FIG. 3b is a schematic diagram of a structure of a station according to an embodiment of this application;

FIG. 4 is a schematic flowchart of a preamble puncture transmission method according to an embodiment of this application;

FIG. 5 is a schematic diagram of a frame structure of a HE PPDU according to an embodiment of this application;

FIG. 6 is a schematic diagram of a frame structure of an EHT PPDU according to an embodiment of this application;

FIG. 7 is a schematic diagram of aligned transmission of a start symbol of an EHT-LTF in an EHT PPDU and a first symbol according to an embodiment of this application;

FIG. 8 is a schematic diagram of a frame structure of a non-HT PPDU according to an embodiment of this application;

FIG. 9 is a schematic diagram of aligned transmission of a start symbol of a non-HT PPDU and a first symbol according to an embodiment of this application;

FIG. 10 is a schematic diagram of non-strict aligned transmission of a start symbol of an EHT-LTF in an EHT PPDU and a first symbol according to an embodiment of this application;

FIG. 11 is a schematic diagram of symbol boundary detection according to an embodiment of this application;

FIG. 12 is a schematic diagram of a structure of a communication apparatus according to an embodiment of this application; and

FIG. 13 is a schematic diagram of a structure of a communication apparatus 1000 according to an embodiment of this application.

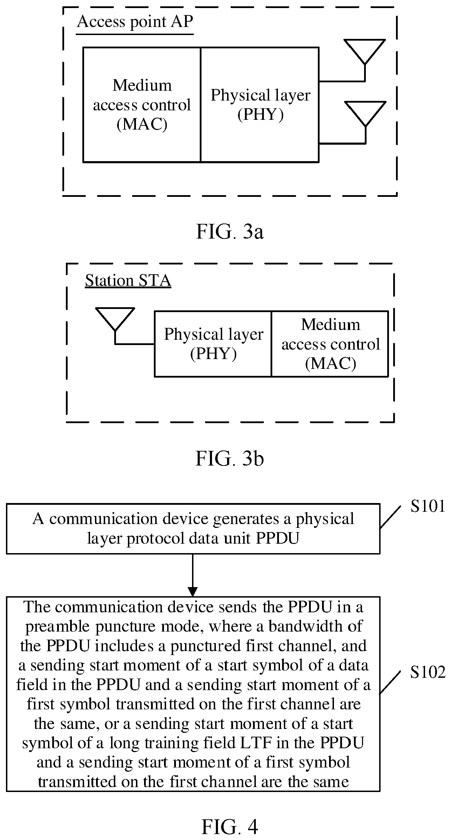

The embodiments illustrated in figures 3a, 3b, 5, 6, 8, 10-12 do not fall under the scope of protection of the present claims.

**DESCRIPTION OF EMBODIMENTS**

The following clearly and completely describes technical solutions in embodiments of this application with reference to accompanying drawings in embodiments of this application.

For ease of understanding the technical solutions in embodiments of this application, the following briefly describes a system architecture of a preamble puncture transmission method provided in embodiments of this application. It may be understood that the system architecture described in embodiments of this application is intended to describe the technical solutions in embodiments of this application more clearly, and does not constitute a limitation on the technical solutions provided in embodiments of this application.

Embodiments of this application provide a preamble puncture transmission method, to align a symbol transmitted on a puncture transmission channel with a symbol transmitted on a punctured channel, so that interference caused by a symbol transmitted on the punctured channel to a symbol transmitted on the puncture transmission channel is reduced, and decoding performance of a receive end is improved. The preamble puncture transmission method may be applied to a wireless communication system, for example, a wireless local area network or a cellular network. The preamble puncture transmission method may be implemented by using a communication device in the wireless communication system or a chip or a processor in a communication device. The communication device may be an access point device or a station device. Alternatively, the communication device may be a wireless communication device that supports parallel transmission on a plurality of links. For example, the communication device may be referred to as a multi-link device (multi-link device, MLD) or a multi-band device. Compared with a communication device that supports only single-link transmission, a multi-link device has higher transmission efficiency and a larger throughput rate.

The preamble puncture transmission method provided in embodiments of this application may be applied to a scenario in which an access point (access point, AP) communicates with one or more stations (station, STA), may be further applied to a scenario in which an AP communicates with another AP, and is also applicable to a scenario in which a STA communicates with another STA. FIG. 2 is a schematic diagram of an architecture of a wireless communication system according to an embodiment of this application. As shown in FIG. 2, the wireless communication system may include one or more APs (for example, an AP 1 and an AP 2 in FIG. 2) and one or more STAs (for example, a STA 1, a STA 2, and a STA 3 in FIG. 2). The AP and the STA support a WLAN communication protocol. The communication protocol may include IEEE 802.11be (or referred to as Wi-Fi 7, the EHT protocol), and may further include protocols such as IEEE 802.11ax and IEEE 802.11ac. Certainly, with continuous evolution and development of communication technologies, the communication protocol may further include a next-generation protocol of IEEE 802.11be, and the like. A WLAN is used as an example. An apparatus for implementing the method in this application may be an AP or a STA in the WLAN, or a chip or a processing system installed in an AP or a STA.

An access point (for example, the AP 1 or the AP 2 in FIG. 2) is an apparatus that has a wireless communication function, supports performing communication by using a WLAN protocol, and has a function of communicating with another device (for example, a station or another access point) in a WLAN. Certainly, the access point may further have a function of communicating with another device. In a WLAN system, an access point may be referred to as an access point station (AP STA). The apparatus having a wireless communication function may be a device of an entire system, or may be a chip, a processing system, or the like installed in a device of an entire system. The device on which the chip or the processing system is installed may implement the method and function in this embodiment of this application under control of the chip or the processing system. The AP in this embodiment of this application is an apparatus that provides a service for a STA, and may support the 802.11 series protocols. For example, the AP may be a communication entity such as a communication server, a router, a switch, or a bridge. The AP may include various forms of macro base stations, micro base stations, relay stations, and the like. Certainly, the AP may alternatively be a chip or a processing system in the various forms of devices, to implement the method and function in this embodiment of this application.

A station (for example, the STA 1, the STA 2, or the STA 3 in FIG. 2) is an apparatus that has a wireless communication function, supports performing communication by using a WLAN protocol, and has a capability of communicating with another station or an access point in a WLAN. In a WLAN system, a station may be referred to as a non-access point station (non-access point station, non-AP STA). For example, the STA is any user communication device that allows a user to communicate with an AP and further communicate with a WLAN. The apparatus having a wireless communication function may be a device of an entire system, or may be a chip, a processing system, or the like installed in a device of an entire system. The device on which the chip or the processing system is installed may implement the method and function in this embodiment of this application under control of the chip or the processing system. For example, the STA may be user equipment that can be connected to the Internet, such as a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone. Alternatively, the STA may be an Internet of things node in the Internet of things, an in-vehicle communication apparatus in the Internet of vehicles, an entertainment device, a game device or system, a global positioning system device, or the like. Alternatively, the STA may be a chip or a processing system in the foregoing terminals.

The WLAN system can provide high-speed and low-latency transmission. With continuous evolution of WLAN application scenarios, the WLAN system is to be applied to more scenarios or industries, for example, the Internet of things industry, the Internet of vehicles industry, the banking industry, enterprise offices, exhibition halls of stadiums, concert halls, hotel rooms, dormitories, wards, classrooms, supermarkets, squares, streets, production workshops, and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in smart home, a node in the Internet of things, an entertainment terminal (for example, an AR, a VR, or another wearable device), a smart device in smart office (for example, a printer, a projector, a loudspeaker, or a stereo), an Internet of vehicle device in the Internet of vehicles, an infrastructure (for example, a vending machine, a self-service navigation station of a supermarket, a self-service cash register device, or a self-service ordering machine) in daily life scenarios, a device in a large sports and music venue, or the like. Specific forms of the STA and the AP are not limited in embodiments of this application, and are merely examples for description herein.

The 802.11 standard focuses on a physical layer (physical layer, PHY) and a medium access control (medium access control, MAC) layer part. In an example, FIG. 3a is a schematic diagram of a structure of an access point according to an embodiment of this application. The AP may be multi-antenna/multi-radio frequency, or may be single-antenna/-single-radio frequency. The antenna/radio frequency is configured to send/receive a data packet. In an implementation, an antenna or a radio frequency part of the AP may be separated from a main body of the AP, that is, may be remotely disposed. In FIG. 3a, the AP may include a physical layer processing circuit and a media access control layer processing circuit. The physical layer processing circuit may be configured to process a physical layer signal, and the MAC layer processing circuit may be configured to process a MAC layer signal. In another example, FIG. 3b is a schematic diagram of a structure of a station according to an embodiment of this application. FIG. 3b is a schematic diagram of a structure of a STA with a single antenna/radio frequency. In an actual scenario, the STA may also be multi-antenna/multi-radio frequency, and may be a device with more than two antennas. The antenna/radio frequency is configured to send/receive a data packet. In FIG. 3b, the STA may include a PHY processing circuit and a MAC layer processing circuit. The physical layer processing circuit may be configured to process a physical layer signal, and the MAC layer processing circuit may be configured to process a MAC layer signal.

The foregoing briefly describes the system architecture in embodiments of this application. The following describes in detail the technical solutions provided in this application with reference to more accompanying drawings.

A preamble puncture technology proposed in 802.11ax resolves a problem of performing transmission through a remaining channel when there is a sub-channel through which transmission is not allowed to be performed. However, in a preamble puncture scenario, a symbol for preamble puncture transmission is interfered with by a symbol transmitted on a punctured channel. Consequently, decoding performance of a receive end is low.

Therefore, an embodiment of this application provides a preamble puncture transmission method, to align data transmitted on a puncture transmission channel with data transmitted on a punctured channel in terms of time, so that interference caused by a symbol transmitted on the punctured channel to a symbol transmitted on the puncture transmission channel is reduced, and decoding performance of a receive end is improved.

The technical solutions provided in this application mainly describe the following: A transmit end identifies, by using a symbol boundary (symbol boundary) detection algorithm, for example, a mid-packet detection (mid-packet detection) algorithm, a symbol boundary, a guard interval, and a symbol length that are of a symbol transmitted on a punctured channel (namely, a channel that cannot be used during preamble puncture transmission), to implement alignment between a symbol transmitted on a puncture transmission channel and the symbol transmitted on the punctured channel in terms of time. If the symbol transmitted on the punctured channel is a symbol in a 4x mode, the transmit end may transmit a HE PPDU or an EHT PPDU having a same guard interval length, and enable a start symbol of a data field to be aligned with the symbol transmitted on the punctured channel. If the symbol transmitted on the punctured channel is a symbol in a 1x mode, the transmit end may perform punctured non-high throughput duplicate transmission (punctured non-HT duplicate transmission). The "alignment" herein may be strict alignment, or may be non-strict alignment, that is, a specific error is allowed.

FIG. 4 is a schematic flowchart of a preamble puncture transmission method according to an embodiment of this application. A communication device that implements the preamble puncture transmission method may be an AP, for example, the AP 1 or the AP 2 shown in FIG. 2, or may be a STA, for example, any STA shown in FIG. 2. The communication device supports the 802.11be protocol, and may further support another WLAN communication protocol such as 802.11ax. It should be understood that the communication device in this embodiment of this application may further support a next-generation protocol of IEEE 802.11be. For ease of description, the next-generation protocol of the 802.11be protocol is referred to as an EHT+ protocol below. In other words, the preamble puncture transmission method provided in this embodiment of this application is applicable to the 802.11be protocol, and may be further applicable to the next-generation protocol of the 802.11be protocol.

As shown in FIG. 4, the preamble puncture transmission method includes but is not limited to the following steps.

S101: A communication device generates a physical layer protocol data unit PPDU.

S102: The communication device sends the PPDU in a preamble puncture mode, where a bandwidth of the PPDU includes a punctured first channel, and a sending start moment of a start symbol of a data field in the PPDU and a sending start moment of a first symbol transmitted on the first channel are the same, or a sending start moment of a start symbol of a long training field LTF in the PPDU and a sending start moment of a first symbol transmitted on the first channel are the same.

The PPDU may be a HE PPDU, or may be an EHT PPDU. Alternatively, the PPDU may be a PPDU in a next generation protocol of the 802.11be protocol, and is denoted as an EHT+ PPDU. The bandwidth of the PPDU includes the punctured first channel. It should be understood that the first channel is a channel that cannot be used during preamble puncture transmission, but a symbol of the PPDU is transmitted on the first channel. Herein, the bandwidth of the PPDU refers to a full bandwidth for sending the PPDU, and is not a bandwidth actually used for sending the PPDU. FIG. 1a is used as an example. The bandwidth of the PPDU is 80 MHz (including a punctured channel, namely, a secondary 20 MHz channel (namely, the first channel)), instead of 60 MHz (including a first 20 MHz channel, a third 20 MHz channel, and a fourth 20 MHz channel) actually used for sending the PPDU. A channel bandwidth of the first channel may be 20 MHz, or may be greater than 20 MHz, for example, consecutive 40 MHz. The channel bandwidth of the first channel is determined based on the preamble puncture mode used by the communication device.

Optionally, a difference between the sending start moment of the first symbol (where the first symbol herein refers to any symbol transmitted on the first channel) transmitted on the first channel and the sending start moment of the start symbol of the data field in the PPDU is less than or equal to a guard interval (which herein refers to a time length of the guard interval) of the first symbol. Alternatively, a difference between the sending start moment of the first symbol (where the first symbol herein refers to any symbol transmitted on the first channel) transmitted on the first channel and the sending start moment of the start symbol of the long training field (long training field, LTF) in the PPDU is less than or equal to a guard interval (which herein refers to a time length of the guard interval) of the first symbol.

It may be understood that when the difference is equal to 0, the sending start moment of the start symbol of the data field in the PPDU and the sending start moment of the first symbol (where the first symbol herein refers to any symbol transmitted on the first channel) transmitted on the first channel are the same. Alternatively, the sending start moment of the start symbol of the long training field (long training field, LTF) in the PPDU and the sending start moment of the first symbol (where the first symbol herein refers to any symbol transmitted on the first channel) transmitted on the first channel are the same. In other words, the start symbol of the data field or the LTF in the PPDU is aligned with the first symbol transmitted on the first channel. When the difference is greater than 0 and less than or equal to the guard interval of the first symbol, it indicates that the start symbol of the data field or the LTF in the PPDU is not strictly aligned with the first symbol. In other words, there is a specific error.

It should be understood that all symbols mentioned in this application include guard intervals. In other words, a guard interval of one symbol is located inside the symbol. Specifically, the guard interval is located in a header of the symbol. Therefore, when the difference is equal to 0, that the start symbol of the data field or the LTF in the PPDU is aligned with the first symbol transmitted on the first channel (or the sending start moment of the start symbol of the data field or the LTF in the PPDU and the sending start moment of the first symbol transmitted on the first channel are the same) may be replaced with the following: A guard interval of the start symbol of the data field or the LTF in the PPDU is aligned with the guard interval of the first symbol transmitted on the first channel, or a sending start moment of the guard interval of the start symbol of the data field or the LTF in the PPDU and a sending start moment of the guard interval of the first symbol transmitted on the first channel are the same.

It should be understood that if the PPDU is a HE PPDU, correspondingly, the LTF herein is a HE-LTF. Similarly, if the PPDU is an EHT PPDU, correspondingly, the LTF herein is an EHT-LTF. Similarly again, if the PPDU is an EHT+ PPDU, correspondingly, the LTF herein is an EHT+-LTF.

Specifically, the system shown in FIG. 2 is used as an example. It is assumed that after the STA 2 in FIG. 2 successfully contends for the first channel through channel contention, the STA 2 sends a PPDU (where a transmitter address of the PPDU is the STA 2, and a receiver address of the PPDU is the AP 2) to the AP 2 on the first channel. It is assumed that the communication device in this embodiment of this application is the AP 1, and the AP 1 performs listening on the first channel. Therefore, the AP 1 may learn, through listening on the first channel, the PPDU sent by the STA 2. In other words, the communication device in this embodiment of this application may receive a PPDU sent by another device on the first channel (where a receiver address of the PPDU herein is not the communication device in this embodiment of this application). It should be understood that the PPDU transmitted on the first channel may be a PPDU of any type, for example, a HE PPDU, an EHT PPDU, or a PPDU of a type specified in another standard protocol. A type of the PPDU transmitted on the first channel is not limited in this embodiment of this application.

Therefore, the communication device may determine, on the first channel by using a mid-packet detection (mid-packet detection) algorithm, one or more pieces of the following information: a symbol boundary moment of the first symbol transmitted on the first channel, the guard interval (guard interval, GI) of the first symbol, and a symbol length of the first symbol.

The communication device may generate a PPDU, and a guard interval of a symbol in the PPDU is the same as the guard interval of the first symbol transmitted on the first channel. It should be understood that the same guard intervals herein mean that the guard intervals have a same time length. In other words, a time length of the guard interval of the symbol in the PPDU is equal to a time length of the guard interval of the first symbol. If the first symbol transmitted on the first channel is a symbol in a 4x mode, a symbol of a data field in the PPDU generated by the communication device is also a symbol in the 4x mode, or both a symbol of a data field and a symbol of an LTF in the PPDU generated by the communication device are symbols in the 4x mode. If the first symbol transmitted on the first channel is a symbol in a 1x mode, a symbol of a data field in the PPDU generated by the communication device is also a symbol in the 1x mode, or both a symbol of a data field and a symbol of an LTF in the PPDU generated by the communication device are symbols in the 1x mode. The communication device may determine a sending start moment of the PPDU based on the symbol boundary moment and the symbol length of the first symbol transmitted on the first channel, and send the PPDU in the preamble puncture mode at the sending start moment.

The following describes in detail three implementations of determining the sending start moment of the PPDU. In a first implementation and a second implementation, how to determine the sending start moment of the PPDU when the sending start moment of the start symbol of the data field or the LTF in the PPDU and the sending start moment of the first symbol (where the first symbol herein refers to any symbol transmitted on the first channel) transmitted on the first channel are the same (that is, when the start symbol of the data field or the LTF in the PPDU is aligned with the first symbol transmitted on the first channel) is described. In a third implementation, how to determine the sending start moment of the PPDU when the difference (namely, the difference between the sending start moment of the first symbol transmitted on the first channel and the sending start moment of the start symbol of the data field or the LTF in the PPDU) is greater than 0 and is less than or equal to the guard interval of the first symbol is described.

In the first implementation, the sending start moment of the PPDU is a difference between a first value and a second value. The first value is a sum of the symbol boundary moment of the first symbol and symbol lengths of N first symbols. If the first symbol transmitted on the first channel is a symbol in the 4x mode, the PPDU generated by the communication device may be any one of a HE PPDU, an EHT PPDU, and an EHT+ PPDU. Therefore, the second value may be a length (which herein refers to a time length) of a preamble before a HE-LTF or an EHT-LTF (or an EHT+-LTF) in the PPDU. Alternatively, the second value is sum of a length of a preamble before a HE-LTF or an EHT-LTF (or an EHT+-LTF) in the PPDU and a time length of the HE-LTF or a time length of the EHT-LTF (or the EHT+-LTF) in the PPDU. N is a positive integer meeting that the symbol lengths of the N first symbols are greater than or equal to the second value.

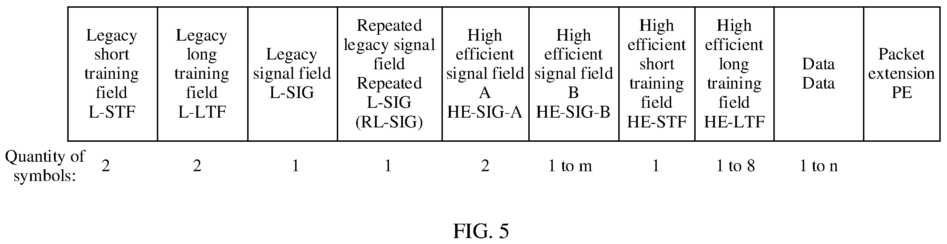

FIG. 5 is a schematic diagram of a frame structure of a HE PPDU according to an embodiment of this application. The HE PPDU is divided into a preamble part and a data field part. As shown in FIG. 5, the preamble part includes a legacy short training field (Legacy Short Training Field, L-STF), a legacy long training field (Legacy Long Training Field, L-LTF), a legacy signal field (Legacy Signal Field A, L-SIG), a repeated legacy signal field (Repeated Legacy Signal Field, RL-SIG), a high efficient signal field-A (High Efficient Signal Field-A, HE-SIG-A), a high efficient signal field-B (High Efficient Signal Field-B, HE-SIG-B), a high efficient short training field (High Efficient Short Training Field, HE-STF), and a high efficient long training field (HE-LTF).

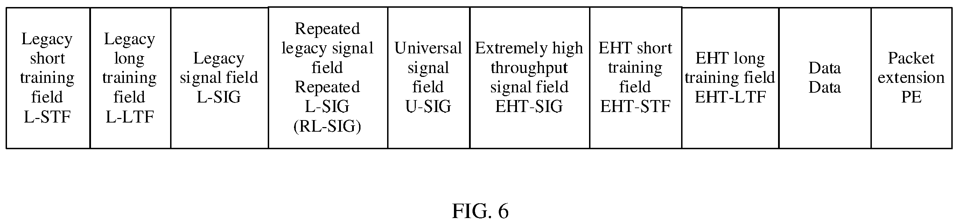

FIG. 6 is a schematic diagram of a frame structure of an EHT PPDU according to an embodiment of this application. The EHT PPDU may also be divided into a preamble part and a data field part. As shown in FIG. 6, fields before a data field may be considered as the preamble part. Optionally, for meanings of fields that may be included in the EHT PPDU, refer to the following Table 1.

**Table 1**

| English acronym | Complete English expression | Function |
|---|---|---|
| L-STF | Legacy Short Training Field | Used for performing PPDU discovery, coarse synchronization, and automatic gain control. |
| L-LTF | Legacy Long Training Field | Used for performing fine synchronization and channel estimation |
| L-SIG | Legacy Signal Field A | Used for carrying signaling information related to a PPDU length, to ensure coexistence |
| U-SIG | Universal SIG | Similar to a HE-SIG-A, where a difference is that a unified signal field is used in an EHT PPDU and subsequent standards, and therefore, this field is referred to as the universal signal field |
| EHT-SIG | Extremely High Throughput Signal Field | Similar to a HE-SIG-B, and used to indicate resource indication information, where a length is 4 $\mu$s x a quantity of symbols |
| EHT-STF | Extremely High Throughput Short Training Field | Used for performing automatic gain control of a subsequent field |
| EHT-LTF | Extremely High Throughput Long Training Field | Used for performing channel estimation |
| Data | | Used for carrying data information |
| PE | Packet Extension | Used for increasing processing time of a receiver |

It may be understood that all symbols ranging from the L-STF to the EHT-STF in the preamble of the EHT PPDU are symbols in the 1x mode. A symbol of the EHT-LTF may be a symbol in the 1x mode, a symbol in a 2x mode, or a symbol in the 4x mode. A symbol of the data field in the EHT PPDU is a symbol in the 4x mode. It should be further understood that the HE PPDU and the EHT+ PPDU are similar to the EHT PPDU. In other words, symbols ranging from an L-STF to a HE-STF in a preamble of the HE PPDU are also symbols in the 1x mode, a symbol of a HE-LTF may be a symbol in the 1x mode, the 2x mode, or the 4x mode, and a symbol of a data field in the HE PPDU is also a symbol in the 4x mode. Similarly, symbols ranging from an L-STF to an EHT+-STF in a preamble of the EHT+ PPDU are also symbols in the 1x mode, a symbol of an EHT+-LTF may also be a symbol in the 1x mode, the 2x mode, or the 4x mode, and a symbol of a data field in the EHT+ PPDU is also a symbol in the 4x mode.

It should be understood that the symbol in the 1x mode is a symbol having a physical layer subcarrier spacing of $\Delta_F^{1x} = 20MHz / 64 = 312.5kHz$, the symbol in the 2x mode is a symbol having a physical layer subcarrier spacing of $\Delta_F^{2x} = 20MHz / 128 = 156.25kHz$, and the symbol in the 4x mode is a symbol having a physical layer subcarrier spacing of $\Delta_F^{4x} = 20MHz / 256 = 78.125kHz$. It may be further understood that all symbols in the 4x mode have a same symbol length (which refers to a time length of a symbol in this application), all symbols in the 2x mode also have a same symbol length, and all symbols in the 1x mode also have a same symbol length.

In an example, if the first symbol transmitted on the first channel is a symbol in the 4x mode, it is assumed that the symbol boundary moment of the first symbol is $T_0$, and the symbol length of the first symbol is $T_s$. It is assumed that the PPDU generated by the communication device is an EHT PPDU, and a structure of the PPDU may be shown in FIG. 6. It should be understood that the example is described by using the EHT PPDU as an example. A manner of determining a sending start moment of the EHT+ PPDU is similar to a manner of determining a sending start moment of the EHT PPDU. Details are not described one by one herein.

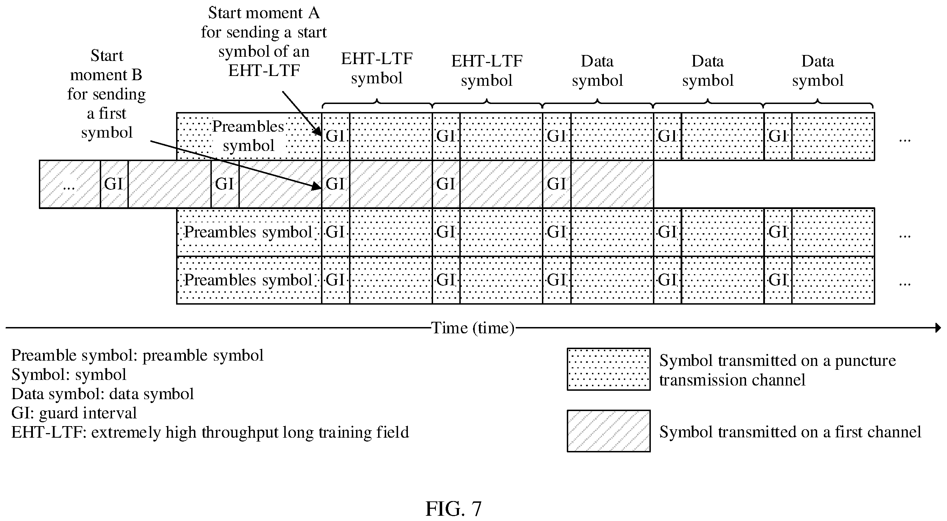

If it is considered that a start symbol of the EHT-LTF in the EHT PPDU is aligned with the first symbol transmitted on the first channel, the EHT-LTF also needs to be transmitted in the 4x mode. In other words, the second value is a length of a preamble before the EHT-LTF in the EHT PPDU. Therefore, the second value, namely, a length $T_p$ of some preambles (including an L-STF, an L-LTF, an L-SIG, an RL-SIG, a U-SIG, an EHT-SIG, and an EHT-STF) before the EHT-LTF in the EHT PPDU, may be calculated, and $T_p=(8+8+4+4+8+4 \times N_{EHT-SIG}+4)$ μs. $N_{EHT-SIG}$ is a quantity of symbols in the EHT-SIG field. Therefore, the sending start moment T of the PPDU is as follows: $T=T_0+N \times T_s-T_p$, where N is any positive integer that meets $N \times T_s \geq T_p$. For example, N is a minimum positive integer that meets $N \times T_s \geq T_p$. $T_0+N \times T_s$ is the first value. The communication device may send the EHT PPDU at the moment T, so that a sending start moment of the start symbol of the EHT-LTF in the EHT PPDU and the sending start moment of the first symbol are the same. In other words, the start symbol of the EHT-LTF is aligned with the first symbol. FIG. 7 is a schematic diagram of aligned transmission of the start symbol of the EHT-LTF in the EHT PPDU and the first symbol according to an embodiment of this application. As shown in FIG. 7, in a time period in which the first symbol is transmitted on the first channel, the start symbol of the EHT-LTF is aligned with the first symbol. It is assumed that the start symbol of the EHT-LTF is sent at a start moment A, the first symbol is sent at a start moment B, and the start moment A is the same as the start moment B. As shown in FIG. 7, guard intervals of symbols of an EHT-LTF and a data field are also the same as the guard interval of the first symbol. It should be understood that FIG. 7 is merely a schematic diagram, and a quantity of symbols in FIG. 7 is merely an example. In actual application, a quantity of symbols of each field in the EHT PPDU is not limited, and a quantity of symbols transmitted on the first channel is not limited either. In addition, the first symbol may be any symbol transmitted on the first channel. FIG. 7 is merely an example rather than a limitation. It should be further understood that a guard interval of a symbol in a preamble part in the EHT PPDU is not shown in FIG. 7.

If it is considered that a start symbol of the data field in the EHT PPDU is aligned with the first symbol transmitted on the first channel, the EHT-LTF may be transmitted in any one of the 1x mode, the 2x mode, and the 4x mode. In other words, the second value is a sum of a length of a preamble before the EHT-LTF in the EHT PPDU and a time length of the EHT-LTF. Therefore, the sending start moment T of the PPDU is as follows: $T=T_0+N \times T_s-T_p-T_{EHT-LTF}$, where $T_{EHT-LTF}$ is a time length that is of the EHT-LTF and that is selected by a transmit end, and N is any positive integer that meets $N \times T_s \geq T_p+T_{EHT-LTF}$. For example, N is a minimum positive integer that meets $N \times T_s \geq T_p+T_{EHT-LTF}$. $T_0+N \times T_s$ is the first value, and $T_p+T_{EHT-LTF}$ is the second value. The communication device may send the EHT PPDU at the moment T, so that a sending start moment of the start symbol of the data field in the EHT PPDU and the sending start moment of the first symbol are the same. In other words, the start symbol of the data field in the EHT PPDU is aligned with the first symbol.

In another example, if the first symbol transmitted on the first channel is a symbol in the 4x mode, it is assumed that the symbol boundary moment of the first symbol is $T_0$, and the symbol length of the first symbol is $T_s$. It is assumed that the PPDU generated by the communication device is a HE PPDU, and a structure of the PPDU may be shown in FIG. 5. In this case, the second value is a length of a preamble before a HE-LTF in the HE PPDU.

If it is considered that a start symbol of the HE-LTF in the HE PPDU is aligned with the first symbol transmitted on the first channel, the HE-LTF also needs to be transmitted in the 4x mode. In other words, the second value is the length of the preamble before the HE-LTF in the HE PPDU. Therefore, the second value, namely, a length $T_p$ of some preambles

(including an L-STF, an L-LTF, an L-SIG, an RL-SIG, a HE-SIG-A, a HE-SIG-B, and a HE-STF) before the HE-LTF in the HE PPDU, may be calculated, and $T_p=(8+8+4+4+8+4xM+4)$ μs. M is a quantity of symbols in the HE-SIG-B field. Therefore, the sending start moment T of the PPDU is as follows: $T=T_0+NxT_s-T_p$, where N is any positive integer that meets $NxT_s≥T_p$. For example, N is a minimum positive integer that meets $NxT_s≥T_p$. $T_0+NxT_s$ is the first value. The communication device may send the HE PPDU at the moment T, so that a sending start moment of the start symbol of the HE-LTF in the HE PPDU and the sending start moment of the first symbol are the same. In other words, the start symbol of the HE-LTF is aligned with the first symbol.

If it is considered that a start symbol of the data field in the HE PPDU is aligned with the first symbol transmitted on the first channel, the HE-LTF may be transmitted in any one of the 1x mode, the 2x mode, and the 4x mode. In other words, the second value is a sum of a length of a preamble before the HE-LTF in the HE PPDU and a time length of the HE-LTF. The sending start moment T of the PPDU is as follows: $T=T_0+NxT_s-T_p-T_{HE-LTF}$, where $T_{HE-LTF}$ is a time length that is of the HE-LTF and that is selected by a transmit end, and N is any positive integer that meets $NxT_s≥T_p+T_{HE-LTF}$. For example, N is a minimum positive integer that meets $NxT_s≥T_p+T_{HE-LTF}$. $T_0+NxT_s$ is the first value, and $T_p+T_{HE-LTF}$ is the second value. The communication device may send the HE PPDU at the moment T, so that a sending start moment of the start symbol of the data field in the HE PPDU and the sending start moment of the first symbol are the same. In other words, the start symbol of the data field in the HE PPDU is aligned with the first symbol.

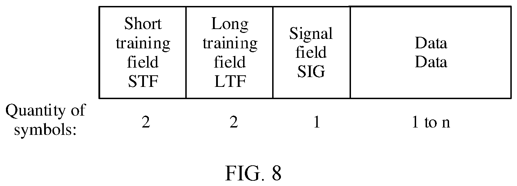

In the second implementation, the sending start moment is the symbol boundary moment of the first symbol or a sum of the symbol boundary moment of the first symbol and symbol lengths of N first symbols. If the first symbol transmitted on the first channel is a symbol in the 1x mode, the PPDU generated by the communication device can only be a non-HT PPDU. This is because all symbols of preamble part fields and data part fields in a non-high throughput (Non-High Throughput, Non-HT) PPDU, a high throughput (high throughput HT) PPDU, and a very high throughput (very high throughput, VHT) PPDU are symbols in the 1x mode. However, in the 1x mode, only the non-HT PPDU is allowed to be transmitted in a preamble puncture transmission mode. FIG. 8 is a schematic diagram of a frame structure of the non-HT PPDU according to an embodiment of this application. As shown in FIG. 8, the non-HT PPDU includes three preamble fields and a data (Data) field, where the three preamble fields are an STF, an LTF, and a signal field (Signal Field, SIG).

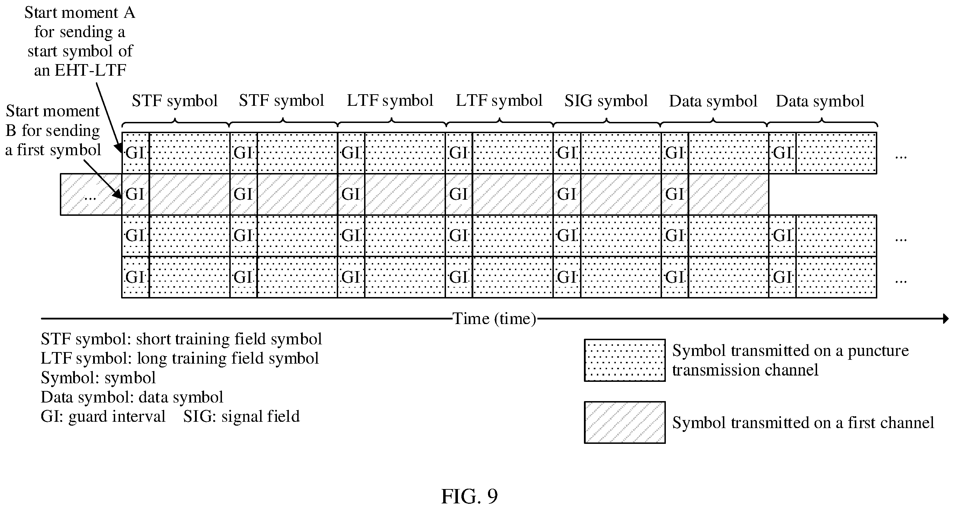

In an example, it is assumed that a symbol boundary moment of a first symbol is $T_0$, and a symbol length of the first symbol is $T_s$. The sending start moment T of the PPDU is as follows: $T=T_0$, or $T=T_0+NxT_s$, where N is a positive integer. The communication device may send the non-HT PPDU at the moment T, so that a sending start moment of a start symbol of the non-HT PPDU and the sending start moment of the first symbol are the same (that is, the start symbol of the non-HT PPDU is aligned with the first symbol). All symbols of the preamble part fields and the data part fields in the non-HT PPDU are symbols in the 1x mode, and the first symbol is also a symbol in the 1x mode. Therefore, the sending start moment of the start symbol of the non-HT PPDU and the sending start moment of the first symbol may be the same. In other words, the start symbol of the non-HT PPDU is aligned with the first symbol. FIG. 9 is a schematic diagram of aligned transmission of the start symbol of the non-HT PPDU and the first symbol according to an embodiment of this application. As shown in FIG. 9, in a time period in which the first symbol is transmitted on the first channel, the start symbol of the non-HT PPDU is aligned with the first symbol. It is assumed that the start symbol of the non-HT PPDU is sent at a start moment A, the first symbol is sent at a start moment B, and the start moment A is the same as the start moment B. A guard interval of a symbol of the non-HT PPDU is also the same as the guard interval of the first symbol. It should be understood that FIG. 9 is merely a schematic diagram, and a quantity of symbols in FIG. 9 is merely an example. In actual application, a quantity of symbols of each field in the non-HT PPDU is not limited, and a quantity of symbols transmitted on the first channel is not limited either. In addition, the first symbol may be any symbol transmitted on the first channel. FIG. 9 is merely an example rather than a limitation.

It can be learned that in the foregoing two implementations (namely, the first implementation and the second implementation), if the first symbol transmitted on the first channel is a symbol in the 4x mode, the transmit end transmits the HE/EHT PPDU whose GI is the same as that of the first symbol, and implements aligned transmission of the start symbol of the data field and the first symbol, or aligned transmission of the start symbol of the HE/EHT-LTF and the first symbol. If the first symbol is a symbol in the 1x mode, the transmit end performs punctured non-HT duplicate transmission (punctured non-HT duplicate transmission), and enables aligned transmission of the start symbol of the non-HT PPDU and the first symbol. In this way, interference caused by a symbol transmitted on a punctured channel to a symbol for preamble puncture transmission (puncture transmission) can be reduced at a receive end, and decoding performance of the receive end can be improved.

In the third implementation, in an actual application scenario, there may be a specific error in a result obtained through performing a mid-packet detection algorithm, and strict alignment between a symbol for preamble puncture transmission and the first symbol described in the first implementation and the second implementation cannot be implemented. Therefore, for this case, in the third implementation, the symbol for preamble puncture transmission is not strictly aligned with the first symbol in terms of time. In other words, an error is allowed at a sending start moment of preamble puncture transmission, to reduce interference caused by the first symbol to preamble puncture transmission at a receive end as much as possible, and improve decoding performance of the receive end.

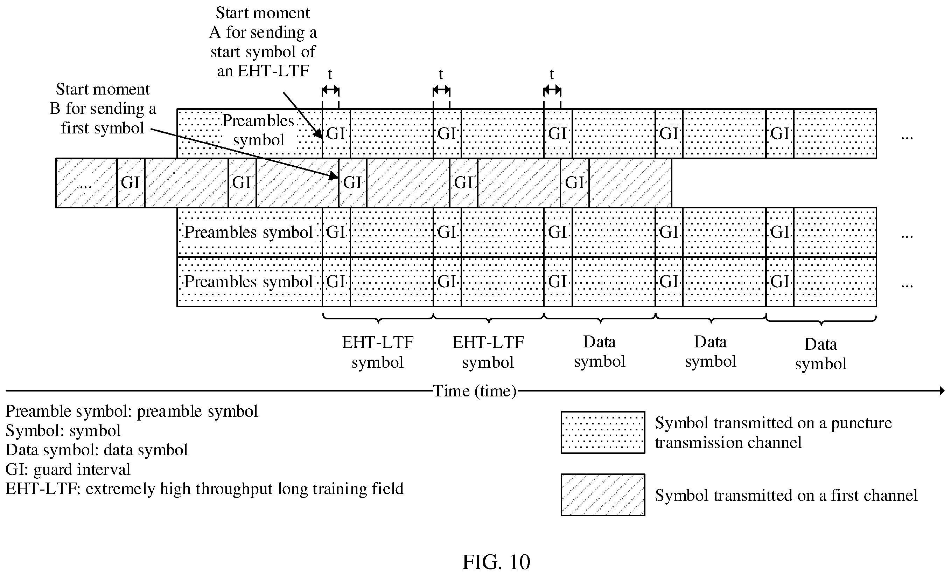

A sudden change in boundaries of adjacent symbols transmitted on the first channel is a main factor causing interference to preamble puncture transmission. Therefore, if it is ensured that the sudden change in the boundaries of the adjacent symbols transmitted on the first channel falls within a guard interval of preamble puncture transmission, interference caused by the sudden change to preamble puncture transmission can be reduced to a maximum extent. Therefore, after generating the PPDU, the communication device may send the PPDU in a preamble puncture mode within a time interval [T-TGI, T). T is a sending start moment of the PPDU when strict aligned transmission is implemented, namely, the sending start moment T determined in the first implementation or the second implementation. $T_{GI}$ is a guard interval length. For example, the first symbol is a symbol in the 4x mode. It is assumed that the PPDU generated by the communication device is an EHT PPDU. FIG. 10 is a schematic diagram of non-strict aligned transmission of a start symbol of an EHT-LTF in an EHT PPDU and a first symbol according to an embodiment of this application. As shown in FIG. 10, it is assumed that the start symbol of the EHT-LTF is sent at a start moment A, the first symbol is sent at a start moment B, and a difference between the start moment A and the start moment B is represented as t. To be specific, the communication device sends the EHT PPDU in the preamble puncture mode at a moment T-t, where a value range of t is (0, $T_{GI}$].

It should be understood that a sending time interval of the PPDU may alternatively be represented as [T-$T_{GI}$, T]. When the sending moment of the PPDU is equal to T, it indicates the foregoing case in which the start symbol of the data field or the LTF in the PPDU for puncture transmission is strictly aligned with the first symbol. Alternatively, when the sending moment of the PPDU is within [T-$T_{GI}$, T), it indicates the foregoing case of non-strict alignment. Similarly, a value range of t may alternatively be [0, $T_{GI}$]. When a value of t is equal to 0 (that is, when the communication device sends the EHT PPDU in the preamble puncture mode at the moment T), it indicates the foregoing case in which the start symbol of the data field or the LTF is strictly aligned with the first symbol and that is described in the first implementation and the second implementation. Alternatively, when a value of t is within (0, $T_{GI}$], it indicates the foregoing case of non-strict alignment.

It should be understood that FIG. 10 is merely a schematic diagram, and a quantity of symbols in FIG. 10 is merely an example. In actual application, a quantity of symbols of each field in the EHT PPDU is not limited, and a quantity of first symbols transmitted on the first channel is not limited either. In addition, FIG. 10 is only an example in which a symbol transmitted on the first channel is used as the first symbol. The first symbol may be any symbol transmitted on the first channel. It should be further understood that a guard interval of a symbol in a preamble part in the EHT PPDU is not shown in FIG. 10.

The following describes in detail specific implementation of determining, on the first channel by using the mid-packet detection algorithm, a symbol boundary moment, a symbol length, and a GI that are of the first symbol transmitted on the first channel.

(1) First, it is determined whether the first symbol transmitted on the first channel is a symbol in a 1x mode (excluding a GI part, a symbol length in the 1x mode is 3.2 μs (microsecond); and the GI in the 1x mode is 0.4 μs or 0.8 μs, and is usually 0.8 μs) or a symbol in a 4x mode (excluding a GI part, a symbol length in the 4x mode is 12.8 μs, and is four times 3.2 μs; and a GI in the 4x mode is 0.8 μs, 1.6 μs, or 3.2 μs). Parallel detection is performed, by using a first window function of a first time length and a second window function of a second time length, on the first symbol transmitted on the first channel. For the first window function, the first window function is moved at an interval of a third time length. For example, the third time length may be 50 ns (nanosecond). Each time the first window function is moved, a symbol sequence received in the first window function on the first channel is obtained (that is, sampling is performed in the first window function every 50 ns). Cross-correlation operation is performed, within each interval, on a front K μs part and a rear K μs part of a symbol sequence received in the first window function, to obtain Q first cross-correlation values. Similarly, for the second window function, the second window function is moved at an interval of the third time length. For example, the third time length may be 50 ns. Each time the second window function is moved, a symbol sequence received in the second window function on the first channel is obtained (that is, sampling is performed in the second window function every 50 ns). Cross-correlation operation is performed, within each interval, on a front K μs part and a rear K μs part of a symbol sequence received in the second window function, to obtain Q second cross-correlation values. Then, the Q first cross-correlation values are compared with a first boundary detection threshold (namely, a preset threshold used for boundary detection), and the Q second cross-correlation values are compared with a second boundary detection threshold (namely, a preset threshold used for boundary detection). A GI located in a front part (namely, a header of each symbol) of each symbol includes a cyclic prefix (cyclic prefix, CP). Therefore, theoretically, if a peak value of a cross-correlation value occurs, it indicates that a window function obtains a repeated part in both the header and a tail of the symbol. Therefore, if there is a value that exceeds the first boundary detection threshold in the Q first cross-correlation values, it is determined that the first symbol transmitted on the first channel is a symbol in the 1x mode. On the contrary, if there is no value that exceeds the first boundary detection threshold in the Q first cross-correlation values, it is determined that the first symbol transmitted on the first channel is not a symbol in the 1x mode. Similarly, if there is a value that exceeds the second boundary detection threshold in the Q second cross-correlation values, it is determined that the first symbol transmitted on the first channel is a symbol in the 4x mode. On the contrary, if there is no value that exceeds the second boundary detection threshold in the Q second cross-correlation values, it is determined that the first symbol transmitted on the first channel is not a symbol in the 4x mode. The first boundary detection threshold and the second boundary detection threshold may be the same, or may be different.

K may be equal to a guard interval length (which refers to a time length of a guard interval) or a fixed value (for example, 0.8 $\mu$s). The third time length may be 50 ns (nanosecond). The first time length and the second time length may be determined based on a guard interval of a symbol. For example, if the GI in the 1x mode is 0.4 $\mu$s, the first time length may be 3.6 $\mu$s, and correspondingly, K may be 0.4 $\mu$s. Alternatively, if the GI in the 1x mode is 0.8 $\mu$s, the first time length may be 4 $\mu$s, and correspondingly, K may be 0.8 $\mu$s. For another example, if the GI in the 4x mode is 0.8 $\mu$s, the second time length may be 13.6 $\mu$s, and correspondingly, K may be 0.8 $\mu$s. Alternatively, if the GI in the 4x mode is 1.6 $\mu$s, the second time length may be 14.4 $\mu$s, and correspondingly, K may be 1.6 $\mu$s or 0.8 $\mu$s. Alternatively, if the GI in the 4x mode is 3.2 $\mu$s, the second time length may be 16 $\mu$s, and correspondingly, K may be 3.2 $\mu$s or 0.8 $\mu$s. It should be understood that, when the guard interval of the first symbol transmitted on the first channel is unknown, it may be assumed that K is equal to 0.4 $\mu$s and 0.8 $\mu$s separately, and a cross-correlation operation is sequentially performed according to the foregoing method.

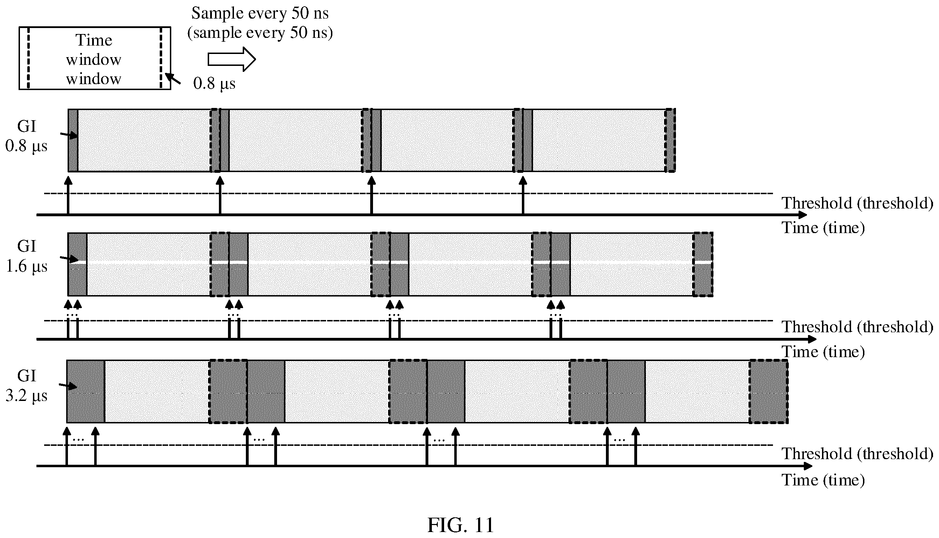

FIG. 11 is a schematic diagram of symbol boundary detection according to an embodiment of this application. FIG. 11 shows symbol boundary detection performed in different GI cases. A window function is moved at an interval of 50 ns, sampling is performed on a symbol sequence received on the first channel, and a cross-correlation operation is performed on first 0.8 $\mu$s and last 0.8 $\mu$s of each sampling, where a quantity of sampling times may be equal to a quotient of a time length of the window function divided by 50 ns. A cross-correlation value obtained through each cross-correlation operation is compared with a preset threshold used for boundary detection, to determine whether the first symbol transmitted on the first channel is a symbol in the 4x mode or a symbol in the 1x mode.

It can be learned that, in FIG. 11, an example in which K is equal to a fixed value 0.8 $\mu$s is used for description. When a value of K does not exceed a guard interval (which herein refers to a time length of the guard interval), a larger value of K indicates higher precision of a cross-correlation result. Alternatively, when a value of K exceeds a guard interval, interference occurs when a cross-correlation result is calculated. In addition, the communication device does not know, in a mid-packet detection process, the guard interval of the first symbol transmitted on the first channel. Therefore, if the value of K is 0.8 $\mu$s, precision of a cross-correlation result of K is high, and no interference is caused.

(2) Second, the guard interval and the symbol length may also be obtained by using a cross-correlation result of a window function. If it is determined that the first symbol transmitted on the first channel is a symbol in the 1x mode, and K is equal to 0.4 $\mu$s, it indicates that when K is equal to 0.4 $\mu$s, the first symbol transmitted on the first channel is a symbol in the 1x mode. Therefore, in this case, the guard interval of the first symbol transmitted on the first channel is 0.4 $\mu$s, and correspondingly, the symbol length of the first symbol is 3.2+0.4=3.6 $\mu$s. Similarly, if the first symbol transmitted on the first channel is a symbol in the 1x mode, and K is equal to 0.8 $\mu$s, it indicates that when K is equal to 0.8 $\mu$s, the first symbol transmitted on the first channel is a symbol in the 1x mode. Therefore, in this case, the guard interval of the first symbol transmitted on the first channel is 0.8 $\mu$s, and correspondingly, the symbol length of the first symbol is 3.2+0.8=4 $\mu$s. If it is determined that the first symbol transmitted on the first channel is a symbol in the 4x mode, a GI length may be determined based on cross-correlation result duration that exceeds the second boundary detection threshold. If cross-correlation result duration that continuously exceeds the second boundary detection threshold is less than 0.8 $\mu$s, the GI length is 0.8 $\mu$s, and the symbol length is 13.6 $\mu$s. If cross-correlation result duration that continuously exceeds the second boundary detection threshold is greater than or equal to 0.8 $\mu$s and is less than 2.4 $\mu$s, the GI length is 1.6 $\mu$s, and the symbol length is 14.4 $\mu$s. If cross-correlation result duration that continuously exceeds the second boundary detection threshold is greater than or equal to 2.4 $\mu$s, the GI length is 3.2 $\mu$s, and the symbol length is 16 $\mu$s. A value range of the second boundary detection threshold may be any value greater than or equal to 0.3 and less than 1 (that is, 0.3≤the second boundary detection threshold<1). This may be specifically determined based on an actual situation. The cross-correlation result duration herein may refer to a time period (namely, a product of a quantity of movement times and the third time length) in which the second window function moves between a first cross-correlation result (namely, the second cross-correlation value) and a last cross-correlation result (namely, the second cross-correlation value) that continuously exceed the second boundary detection threshold. For example, if a quantity of times that the second window function moves between a first cross-correlation result that exceeds the second boundary detection threshold and a last cross-correlation result that exceeds the threshold is 20 times, and the third time length is 50 ns, a time period in which the second window function moves is 20x50=1000 ns=1 $\mu$s.

(3) Finally, regardless of whether the first symbol transmitted on the first channel is a symbol in the 1x mode or a symbol in the 4x mode, a moment corresponding to the first cross-correlation result (cross-correlation value) that exceeds a boundary detection threshold is determined as the symbol boundary moment of the first symbol. For example, the first cross-correlation result that exceeds the boundary detection threshold is obtained through performing a cross-correlation operation after the window function moves 20 times. Therefore, the symbol boundary moment of the first symbol may be a product of a quantity of window function movement times and the third time length, that is, 20x50=1000 ns=1 $\mu$s. It may be understood that, if the first symbol transmitted on the first channel is a symbol in the 1x mode, a moment corresponding to

the 1st first cross-correlation value that exceeds the first boundary detection threshold is determined as the symbol boundary moment of the first symbol. Similarly, if the first symbol transmitted on the first channel is a symbol in the 4x mode, a moment corresponding to the 1st second cross-correlation value that exceeds the second boundary detection threshold is determined as the symbol boundary moment of the first symbol.

It should be understood that the symbol boundary moment (namely, the symbol boundary moment determined in step 3) of the first symbol determined by using the mid-packet detection algorithm is a start moment of the GI. However, because a GI length may also be determined by using the mid-packet detection algorithm, the boundary moment of the first symbol may alternatively be an end moment (determined by adding the start moment of the GI and the GI length) of the GI. Therefore, in this case, the sending start moment of the PPDU needs to be further advanced by a GI length. In other words, if the boundary moment of the first symbol is the end moment of the GI, the communication device sends the generated PPDU in the preamble puncture mode at a moment $(T-T_{GI})$. Similarly, when a symbol for preamble puncture transmission is not strictly aligned with a symbol transmitted on the first channel, the communication device may send the generated PPDU in the preamble puncture mode within a time interval $[T-2T_{GI}, T-T_{GI})$. T is described above. Details are not described herein again. $T_{GI}$ is a guard interval length.

Optionally, detection may be performed on several first symbols by using the mid-packet detection algorithm, to enhance reliability of detection results of the symbol boundary moment, the symbol length, and the GI that are of the first symbol. In other words, in the foregoing step (1), the time period in which the first window function moves may be an integer multiple of the first time length, and the time period in which the second window function moves may be an integer multiple of the second time length.

In this embodiment of this application, a symbol boundary, a guard interval, and a symbol length of a symbol (namely, the first symbol) transmitted on the first channel are obtained by using the mid-packet detection algorithm. The sending moment of preamble puncture transmission is calculated based on the obtained symbol boundary, guard interval, and symbol length, so that the start symbol of the data field or the LTF for preamble puncture transmission is aligned with the first symbol (which may be non-strict alignment, that is, a specific error is allowed). In this way, interference caused by a symbol transmitted on a punctured channel to a symbol for preamble puncture transmission is reduced at a receive end, and decoding performance of the receive end is improved.

The method provided in this application is described in detail in the foregoing content. To facilitate implementation of the foregoing solutions in embodiments of this application, embodiments of this application further provide a corresponding apparatus or device.

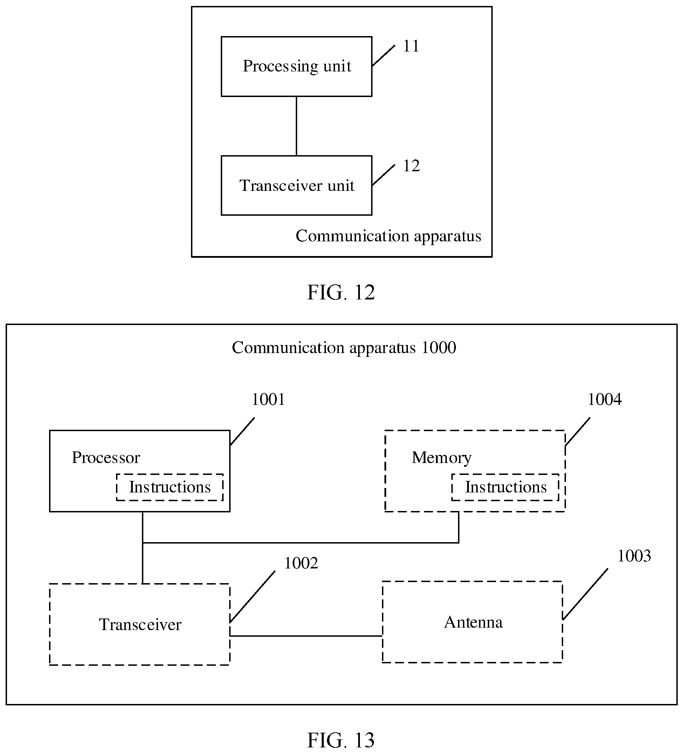

In embodiments of this application, the communication module may be divided into function modules based on the foregoing method examples. For example, each function module may be obtained through division for each corresponding function, or two or more functions may be integrated into one processing module. The integrated module may be implemented in a form of hardware, or may be implemented in a form of a software function module. It should be noted that, in embodiments of this application, module division is an example, and is merely logical function division. In an actual implementation, another division manner may be used. The following describes in detail a communication apparatus in embodiments of this application with reference to FIG. 12 and FIG. 13. The communication apparatus is an access point or a station. Further, the communication apparatus may be an apparatus in the AP, or the communication apparatus may be an apparatus in the STA.

When an integrated unit is used, refer to FIG. 12. FIG. 12 is a schematic diagram of a structure of a communication apparatus according to an embodiment of this application. The communication apparatus may be an AP or a STA. Further, the communication apparatus may be a chip in the AP or the STA, for example, a Wi-Fi chip. As shown in FIG. 12, the communication apparatus includes a processing unit 11 and a transceiver unit 12.

The processing unit 11 is configured to generate a PPDU, and the transceiver unit 12 is configured to send the PPDU in a preamble puncture mode. A bandwidth of the PPDU includes a punctured first channel. A sending start moment of a start symbol of a data field in the PPDU and a sending start moment of a first symbol transmitted on the first channel are the same, or a sending start moment of a start symbol of a long training field LTF in the PPDU and a sending start moment of a first symbol transmitted on the first channel are the same.

Optionally, if the first symbol transmitted on the first channel is a symbol in a 4x mode, a symbol of the data field in the PPDU is a symbol in the 4x mode, or both a symbol of the LTF and a symbol of the data field in the PPDU are symbols in the 4x mode.

Optionally, if the first symbol transmitted on the first channel is a symbol in a 1x mode, a symbol of the data field in the PPDU is a symbol in the 1x mode, or both a symbol of the LTF and a symbol of the data field in the PPDU are symbols in the 1x mode.

Optionally, a guard interval of a symbol in the PPDU is the same as a guard interval of the first symbol transmitted on the first channel. It should be understood that the same guard intervals herein mean that the guard intervals have a same time length.

Optionally, if the first symbol transmitted on the first channel is a symbol in the 4x mode, the processing unit 11 is further configured to determine a sending start moment of the PPDU. The transceiver unit is specifically configured to send the PPDU in the preamble puncture mode at the sending start moment. The sending start moment is a difference between a first value and a second value. The first value is a sum of a symbol boundary moment of the first symbol and symbol lengths of N first symbols; and the second value is a length of a preamble before a high efficient long training field HE-LTF or an extremely high throughput long training field EHT-LTF in the PPDU, or the second value is a sum of a length of a preamble before a HE-LTF or an EHT-LTF in the PPDU and a time length of the HE-LTF or the EHT-LTF in the PPDU. N is a positive integer meeting that the symbol lengths of the N first symbols are greater than or equal to the second value.

Optionally, if the first symbol transmitted on the first channel is a symbol in the 1x mode, the processing unit 11 is further configured to determine a sending start moment of the PPDU, where the sending start moment is the symbol boundary moment of the first symbol or the sum of the symbol boundary moment of the first symbol and the symbol lengths of the N first symbols. The transceiver unit is specifically configured to send the PPDU in the preamble puncture mode at the sending start moment.

Optionally, both the symbol boundary moment of the first symbol and the symbol length of the first symbol are determined based on a mid-packet detection algorithm.

It should be understood that the communication apparatus may correspondingly perform the foregoing embodiments, and the foregoing operations or functions of the units in the communication apparatus are separately used to implement corresponding operations of the communication device in the foregoing embodiments. For brevity, details are not described herein again.

The foregoing describes the communication device in this embodiment of this application. The following describes a possible product form of the communication device. It should be understood that any product in any form having the function of the communication device described in FIG. 12 falls within the protection scope of this embodiment of this application. It should be further understood that the following descriptions are merely examples, and a product form of the communication device in embodiments of this application is not limited thereto.

As a possible product form, the communication device described in this embodiment of this application may be implemented by using a general bus architecture.

FIG. 13 is a schematic diagram of a structure of a communication apparatus 1000 according to an embodiment of this application. The communication apparatus 1000 may be an AP, a STA, or an apparatus in an AP or a STA. As shown in FIG. 13, the communication apparatus 1000 includes a processor 1001 and a transceiver 1002 that is internally connected to and communicates with the processor. The processor 1001 is a general-purpose processor, a dedicated processor, or the like. For example, the processor 1001 may be a baseband processor or a central processing unit. The baseband processor may be configured to process a communication protocol and communication data, and the central processing unit may be configured to control a communication apparatus (for example, a base station, a baseband chip, a terminal, a terminal chip, a DU, or a CU) to execute a computer program, to process data of the computer program. The transceiver 1002 may be referred to as a transceiver unit, a transceiver machine, a transceiver circuit, or the like, and is configured to implement a transceiver function. The transceiver 1002 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1000 may further include an antenna 1003 and/or a radio frequency unit (not shown in FIG. 13). The antenna 1003 and/or the radio frequency unit may be located inside the communication apparatus 1000, or may be separated from the communication apparatus 1000. In other words, the antenna 1003 and/or the radio frequency unit may be deployed remotely or in a distributed manner.

Optionally, the communication apparatus 1000 may include one or more memories 1004. The memory 1004 may store instructions. The instructions may be a computer program. The computer program may be run on the communication apparatus 1000, so that the communication apparatus 1000 performs the method described in the foregoing method embodiment. Optionally, the memory 1004 may further store data. The communication apparatus 1000 and the memory 1004 may be separately disposed, or may be integrated together.

The processor 1001, the transceiver 1002, and the memory 1004 may be connected through a communication bus.

The communication apparatus 1000 may be configured to perform a function of the communication device in the foregoing embodiment. The processor 1001 may be configured to perform step S101 in FIG. 4 and/or another process of the technology described in this specification. The transceiver 1002 may be configured to perform step S102 in FIG. 4 and/or another process of the technology described in this specification.

Optionally, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, so that the communication apparatus 1000 can perform the method described in the foregoing method embodiment. The computer program may be permanently configured in the processor 1000. In this case, the processor 1001 may be implemented by hardware.

In an implementation, the communication apparatus 1000 may include a circuit, and the circuit may implement a sending, receiving, or communication function in the foregoing method embodiment. The processor and the transceiver that are described in this application may be implemented on an integrated circuit (integrated circuit, IC), an analog IC, a radio frequency integrated circuit RFIC, a mixed signal IC, an application-specific integrated circuit (application specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (N-type Metal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 13. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver machine, a terminal, an intelligent terminal, a cellular phone, a wireless device, a handheld device, a mobile unit, a vehicle-mounted device, a network device, a cloud device, an artificial intelligence device, or the like; or
(6) another device, or the like.

As a possible product form, the communication device described in this embodiment of this application may be implemented by using a general-purpose processor.

A general-purpose processor for implementing the communication device includes a processing circuit and an input/output interface that is internally connected to and communicates with the processing circuit.

The general-purpose processor may be configured to perform functions of the communication device in the foregoing embodiments. Specifically, the processing circuit may be configured to perform step S101 in FIG. 4 and/or another process of the technology described in this specification. The input/output interface may be configured to perform step S 102 in FIG. 4 and/or another process of the technology described in this specification.

It should be understood that the communication apparatuses in the foregoing various product forms have any function of the communication device in the method embodiment. Details are not described herein again.

An embodiment of this application further provides a computer-readable storage medium. The computer-readable storage medium stores computer program code. When the processor executes the computer program code, an electronic device performs the method in the foregoing embodiments.

An embodiment of this application further provides a computer program product. When the computer program product runs on a computer, the computer is enabled to perform the method in the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in the foregoing embodiments.

Methods or algorithm steps described with reference to the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in one or more of the foregoing examples, the functions described in this application may be implemented by using hardware, software, firmware, or any combination thereof. When the functions are implemented by using software, the functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or special-purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application, as defined by the appended claims.

**Claims**

1.  A preamble puncture transmission method, comprising:

    generating (S101), by a communication device, a physical layer protocol data unit, PPDU; and
    sending (S102), by the communication device, the PPDU in a preamble puncture mode, wherein a bandwidth of the PPDU comprises a punctured first channel, and a sending start moment of a start symbol of a data field in the PPDU and a sending start moment of a first symbol transmitted on the first channel are the same, or a sending start moment of a start symbol of a long training field, LTF, in the PPDU and a sending start moment of a first symbol transmitted on the first channel are the same; and wherein a guard interval of the start symbol of the data field or the LTF in the PPDU is aligned with a guard interval of the first symbol transmitted on the first channel, or the guard interval of the start symbol of the data field or the LTF in the PPDU and the guard interval of the first symbol transmitted on the first channel have a same sending start moment, and
    wherein before sending the PPDU in the preamble puncture mode, the method further comprises:
    listening, by the communication device, on the first channel, and determining, by using a mid-packet detection algorithm with respect to a PDDU sent by another device on the first channel, one or more pieces of the following information: a symbol boundary moment of the first symbol transmitted on the first channel, the guard interval of the first symbol, and a symbol length of the first symbol.

2.  The method according to claim 1, wherein the first symbol transmitted on the first channel is a symbol in a 4x mode, and a symbol of the data field in the PPDU is a symbol in the 4x mode, or both a symbol of the LTF and a symbol of the data field that are in the PPDU are symbols in the 4x mode.

3.  The method according to claim 1, wherein the first symbol transmitted on the first channel is a symbol in a 1x mode, and a symbol of the data field in the PPDU is a symbol in the 1x mode, or both a symbol of the LTF and a symbol of the data field that are in the PPDU are symbols in the 1x mode.

4.  The method according to any one of claims 1, 2, wherein the first symbol transmitted on the first channel is a symbol in the 4x mode;
    before the sending the PPDU in the preamble puncture mode, the method further comprises:

    determining a sending start moment of the PPDU, wherein
    the sending start moment is a difference between a first value and a second value; the first value is a sum of a symbol boundary moment of the first symbol and symbol lengths of N first symbols; the second value is a length of a preamble before a high efficient long training field, HE-LTF, or an extremely high throughput long training field, EHT-LTF, in the PPDU, or the second value is a sum of a length of a preamble before a HE-LTF or an EHT-LTF in the PPDU and a time length of the HE-LTF or the EHT-LTF in the PPDU; and N is a positive integer meeting that the symbol lengths of the N first symbols are greater than or equal to the second value; and
    the sending the PPDU in the preamble puncture mode comprises:
    sending the PPDU in the preamble puncture mode at the sending start moment.

5.  The method according to any one of claims 1, 3, wherein the first symbol transmitted on the first channel is a symbol in the 1x mode;
    before the sending the PPDU in the preamble puncture mode, the method further comprises:

    determining a sending start moment of the PPDU, wherein the sending start moment is the symbol boundary moment of the first symbol or a sum of the symbol boundary moment of the first symbol and symbol lengths of N first symbols, and N is a positive integer; and

the sending the PPDU in the preamble puncture mode comprises:

sending the PPDU in the preamble puncture mode at the sending start moment.

6. A communication apparatus, comprising:

a memory, configured to store program instructions; and

a processor, configured to perform the program instructions to cause the communication apparatus to perform the method in any one of claims 1 to 5.

7. A computer-readable storage medium, wherein the computer-readable storage medium stores program instructions, and when the program instructions are run on a computer, the computer is enabled to perform the method according to any one of claims 1 to 5.

8. A computer program product comprising program instructions, wherein when the program instructions are run on a computer, the computer is enabled to perform the method according to any one of claims 1 to 5.

**Patentansprüche**

1. Preamble-Puncturing-Übertragungsverfahren, umfassend:

Erzeugen (S101), durch eine Kommunikationseinrichtung, einer Protokolldateneinheit der physikalischen Schicht, PPDU; und

Senden (S102), durch die Kommunikationseinrichtung, der PPDU in einem Preamble-Puncturing-Modus, wobei eine Bandbreite der PPDU einen umgangenen ersten Kanal umfasst und ein Sendestartzeitpunkt eines Startsymbols eines Datenfelds in der PPDU und ein Sendestartzeitpunkt eines auf dem ersten Kanal übertragenen ersten Symbols identisch sind oder ein Sendestartzeitpunkt eines Startsymbols eines langen Trainingsfelds, LTF, in der PPDU und ein Sendestartzeitpunkt eines auf dem ersten Kanal übertragenen ersten Symbols identisch sind; und wobei ein Schutzintervall des Startsymbols des Datenfelds oder des LTF in der PPDU an ein Schutzintervall des auf dem ersten Kanal übertragenen ersten Symbols angepasst ist oder das Schutzintervall des Startsymbols des Datenfelds oder des LTF in der PPDU und das Schutzintervall des auf dem ersten Kanal übertragenen ersten Symbols denselben Sendestartzeitpunkt aufweisen, und

wobei das Verfahren vor dem Senden der PPDU in dem Preamble-Puncturing-Modus ferner Folgendes umfasst:

Abhören, durch die Kommunikationseinrichtung, auf dem ersten Kanal und Bestimmen, unter Verwendung eines Mid-Packet-Erkennungsalgorithmus bezüglich einer PDDU, die durch eine andere Einrichtung auf dem ersten Kanal gesendet wird,

einer oder mehrerer der folgenden Informationen: ein Symbolgrenzzeitpunkt des ersten auf dem ersten Kanal übertragenen Symbols, das Schutzintervall des ersten Symbols und eine Symbollänge des ersten Symbols.

2. Verfahren nach Anspruch 1, wobei das erste auf dem ersten Kanal übertragene Symbol ein Symbol in einem 4x-Modus ist und ein Symbol des Datenfelds in der PPDU ein Symbol in dem 4x-Modus ist oder sowohl ein Symbol des LTF als auch ein Symbol des Datenfelds, die sich in der PPDU befinden, Symbole in dem 4x-Modus sind.

3. Verfahren nach Anspruch 1, wobei das erste auf dem ersten Kanal übertragene Symbol ein Symbol in einem 1x-Modus ist und ein Symbol des Datenfelds in der PPDU ein Symbol in dem 1x-Modus ist oder sowohl ein Symbol des LTF als auch ein Symbol des Datenfelds, die sich in der PPDU befinden, Symbole in dem 1x-Modus sind.

4. Verfahren nach einem der Ansprüche 1, 2, wobei das erste auf dem ersten Kanal übertragene Symbol ein Symbol in dem 4x-Modus ist;

wobei das Verfahren vor dem Senden der PPDU in dem Preamble-Puncturing-Modus ferner Folgendes umfasst:

Bestimmen eines Sendestartzeitpunkts der PPDU, wobei

der Sendestartzeitpunkt eine Differenz zwischen einem ersten Wert und einem zweiten Wert ist; der erste Wert eine Summe aus einem Symbolgrenzzeitpunkt des ersten Symbols und Symbollängen von N ersten Symbolen ist; der zweite Wert eine Länge einer Präambel vor einem hocheffizienten langen Trainingsfeld, HE-LTF, oder einem langem Trainingsfeld mit extrem hohem Durchsatz, EHT-LTF, in der PPDU ist oder der zweite Wert eine Summe aus einer Länge einer Präambel vor einem HE-LTF oder einem EHT-LTF in der PPDU und einer zeitlichen Länge des HE-LTF oder des EHT-LTF in der PPDU ist; und N eine positive Ganzzahl ist, die erfüllt, dass die Symbollängen der N ersten Symbole größer oder gleich dem zweiten Wert sind; und

das Senden der PPDU in dem Preamble-Puncturing-Modus Folgendes umfasst:
Senden der PPDU in dem Preamble-Puncturing-Modus zum Sendestartzeitpunkt.

5. Verfahren nach einem der Ansprüche 1, 3, wobei das erste auf dem ersten Kanal übertragene Symbol ein Symbol in dem 1x-Modus ist;

wobei das Verfahren vor dem Senden der PPDU in dem Preamble-Puncturing-Modus ferner Folgendes umfasst:

Bestimmen eines Sendestartzeitpunkts der PPDU, wobei der Sendestartzeitpunkt der Symbolgrenzzeitpunkt des ersten Symbols oder eine Summe aus dem Symbolgrenzzeitpunkt des ersten Symbols und Symbollängen von N ersten Symbolen ist und N eine positive Ganzzahl ist; und

das Senden der PPDU in dem Preamble-Puncturing-Modus Folgendes umfasst:
Senden der PPDU in dem Preamble-Puncturing-Modus zum Sendestartzeitpunkt.

6. Kommunikationsvorrichtung, umfassend:

einen Speicher, der dazu konfiguriert ist, Programmanweisungen zu speichern; und
einen Prozessor, der dazu konfiguriert ist, die Programmanweisungen durchzuführen, um die Kommunikationsvorrichtung zu veranlassen, das Verfahren nach einem der Ansprüche 1 bis 5 durchzuführen.

7. Computerlesbares Speichermedium, wobei das computerlesbare Speichermedium Programmanweisungen speichert und, wenn die Programmanweisungen auf einem Computer ausgeführt werden, der Computer in die Lage versetzt wird, das Verfahren nach einem der Ansprüche 1 bis 5 durchzuführen.

8. Computerprogrammprodukt, umfassend Programmanweisungen, wobei, wenn die Programmanweisungen auf einem Computer ausgeführt werden, der Computer in die Lage versetzt wird, das Verfahren nach einem der Ansprüche 1 bis 5 durchzuführen.

**Revendications**

1. Procédé de transmission de perforation de préambule, comprenant :

la génération (S101), par un dispositif de communication, d'une unité de données de protocole de couche physique, PPDU ; et
l'envoi (S102), par le dispositif de communication, de la PPDU dans le mode de perforation de préambule, dans lequel la bande passante de la PPDU comprend un premier canal perforé, et l'instant de début d'envoi d'un symbole de début d'un champ de données dans la PPDU et l'instant de début d'envoi d'un premier symbole transmis sur le premier canal sont identiques, ou l'instant de début d'envoi d'un symbole de début d'un champ d'apprentissage long, LTF, dans la PPDU et l'instant de début d'envoi d'un premier symbole transmis sur le premier canal sont identiques ; et dans lequel un intervalle de garde du symbole de début du champ de données ou du LTF dans la PPDU est aligné sur un intervalle de garde du premier symbole transmis sur le premier canal, ou l'intervalle de garde du symbole de début du champ de données ou du LTF dans la PPDU et l'intervalle de garde du premier symbole transmis sur le premier canal ont le même instant de début d'envoi, et dans lequel avant d'envoyer la PPDU dans le mode de perforation de préambule, le procédé comprend également :

l'écoute, par le dispositif de communication, sur le premier canal, et la détermination, à l'aide d'un algorithme de détection de mi-paquet par rapport à une PDDU envoyée par un autre dispositif sur le premier canal, d'un ou plusieurs éléments des informations suivantes : un instant limite de symbole du premier symbole transmis sur le premier canal, l'intervalle de garde du premier symbole, et une longueur de symbole du premier symbole.

2. Procédé selon la revendication 1, dans lequel le premier symbole transmis sur le premier canal est un symbole dans le mode 4x, et un symbole du champ de données dans la PPDU est un symbole dans le mode 4x, ou à la fois un symbole du LTF et un symbole du champ de données qui sont dans la PPDU sont des symboles dans le mode 4x.

**3.** Procédé selon la revendication 1, dans lequel le premier symbole transmis sur le premier canal est un symbole dans le mode 1x, et un symbole du champ de données dans la PPDU est un symbole dans le mode 1x, ou à la fois un symbole du LTF et un symbole du champ de données qui sont dans la PPDU sont des symboles dans le mode 1x.

**4.** Procédé selon l'une quelconque des revendications 1 et 2, dans lequel le premier symbole transmis sur le premier canal est un symbole dans le mode 4x ;
avant d'envoyer la PPDU dans le mode de perforation de préambule, le procédé comprend également :

la détermination d'un instant de début d'envoi de la PPDU, dans lequel
l'instant de début d'envoi est une différence entre une première valeur et une seconde valeur ; la première valeur est une somme d'un instant limite de symbole du premier symbole et de longueurs de symbole de N premiers symboles ; la seconde valeur est une longueur d'un préambule avant un champ d'apprentissage long à haute efficacité, HE-LTF, ou un champ d'apprentissage long à très haut débit, EHT-LTF, dans la PPDU, ou la seconde valeur est une somme d'une longueur d'un préambule avant un HE-LTF ou un EHT-LTF dans la PPDU et d'une durée du HE-LTF ou de l'EHT-LTF dans la PPDU ; et N est un entier positif confirmant que les longueurs de symbole des N premiers symboles sont supérieures ou égales à la seconde valeur ; et
l'envoi de la PPDU dans le mode de perforation de préambule comprend :
l'envoi de la PPDU dans le mode de perforation de préambule à l'instant de début d'envoi.

**5.** Procédé selon l'une quelconque des revendications 1 et 3, dans lequel le premier symbole transmis sur le premier canal est un symbole dans le mode 1x ;
avant d'envoyer la PPDU dans le mode de perforation de préambule, le procédé comprend également :

la détermination d'un instant de début d'envoi de la PPDU, dans lequel l'instant de début d'envoi est l'instant limite de symbole du premier symbole ou une somme de l'instant limite de symbole du premier symbole et des longueurs de symbole de N premiers symboles, et N est un entier positif ; et
l'envoi de la PPDU dans le mode de perforation de préambule comprend :
l'envoi de la PPDU dans le mode de perforation de préambule à l'instant de début d'envoi.

**6.** Appareil de communication, comprenant :

une mémoire, configurée pour stocker des instructions de programme ; et
un processeur, configuré pour réaliser les instructions de programme pour amener l'appareil de communication à réaliser le procédé selon l'une quelconque des revendications 1 à 5.

**7.** Support de stockage lisible par ordinateur, dans lequel le support de stockage lisible par ordinateur stocke des instructions de programme, et lorsque les instructions de programme sont exécutées sur un ordinateur, l'ordinateur est activé pour réaliser le procédé selon l'une quelconque des revendications 1 à 5.

**8.** Produit de programme informatique comprenant des instructions de programme, dans lequel lorsque les instructions de programme sont exécutées sur un ordinateur, l'ordinateur est activé pour réaliser le procédé selon l'une quelconque des revendications 1 à 5.

Primary 20
(primary 20)

Secondary 20
(secondary 20)

Secondary 40 (secondary 40)

80 MHz

Punctured
(punctured)

FIG. 1a

Preamble puncture transmission
(preamble puncture transmission)    Unpunctured

Ongoing transmission (ongoing transmission)    Punctured

Preamble puncture transmission
(preamble puncture transmission)    Unpunctured

Preamble puncture transmission
(preamble puncture transmission)    Unpunctured

Time (time)

FIG. 1b

AP 1

AP 2

STA 1

STA 3    STA 2

FIG. 2

Access point AP

Medium
access control
(MAC)

Physical layer
(PHY)

FIG. 3a

Station STA

Physical layer
(PHY)

Medium
access control
(MAC)

FIG. 3b

A communication device generates a physical
layer protocol data unit PPDU

S101

The communication device sends the PPDU in a
preamble puncture mode, where a bandwidth of
the PPDU includes a punctured first channel, and
a sending start moment of a start symbol of a data
field in the PPDU and a sending start moment of a
first symbol transmitted on the first channel are
the same, or a sending start moment of a start
symbol of a long training field LTF in the PPDU
and a sending start moment of a first symbol
transmitted on the first channel are the same

S102

FIG. 4

| Legacy short training field L-STF | Legacy long training field L-LTF | Legacy signal field L-SIG | Repeated legacy signal field Repeated L-SIG (RL-SIG) | High efficient signal field A HE-SIG-A | High efficient signal field B HE-SIG-B | High efficient short training field HE-STF | High efficient long training field HE-LTF | Data Data | Packet extension PE |
|---|---|---|---|---|---|---|---|---|---|
| 2 | 2 | 1 | 1 | 2 | 1 to m | 1 | 1 to 8 | 1 to n | |

Quantity of symbols:

FIG. 5

| Legacy short training field L-STF | Legacy long training field L-LTF | Legacy signal field L-SIG | Repeated legacy signal field Repeated L-SIG (RL-SIG) | Universal signal field U-SIG | Extremely high throughput signal field EHT-SIG | EHT short training field EHT-STF | EHT long training field EHT-LTF | Data Data | Packet extension PE |
|---|---|---|---|---|---|---|---|---|---|

FIG. 6

EP 4 231 557 B1

Start moment A
for sending a start
symbol of an
EHT-LTF

Start
moment B
for sending
a first
symbol

EHT-LTF
symbol

EHT-LTF
symbol

Data
symbol

Data
symbol

Data
symbol

Preambles
symbol

GI | GI | GI | GI | GI | ...

... | GI | GI | GI | GI | GI

Preambles symbol | GI | GI | GI | GI | GI | ...

Preambles symbol | GI | GI | GI | GI | GI | ...

Time (time)

Preamble symbol: preamble symbol
Symbol: symbol
Data symbol: data symbol
GI: guard interval
EHT-LTF: extremely high throughput long training field

Symbol transmitted on a puncture transmission channel

Symbol transmitted on a first channel

FIG. 7

| Short training field STF | Long training field LTF | Signal field SIG | Data Data |
|---|---|---|---|

Quantity of symbols:

| 2 | 2 | 1 | 1 to n |
|---|---|---|---|

FIG. 8

Start moment A
for sending a
start symbol of
an EHT-LTF

Start moment
B for sending
a first symbol

| STF symbol | STF symbol | LTF symbol | LTF symbol | SIG symbol | Data symbol | Data symbol |
|---|---|---|---|---|---|---|
| GI | GI | GI | GI | GI | GI | GI | ... |
| GI | GI | GI | GI | GI | GI | |
| GI | GI | GI | GI | GI | GI | GI | ... |
| GI | GI | GI | GI | GI | GI | GI | ... |

──────────────Time (time)──────────────▶

STF symbol: short training field symbol
LTF symbol: long training field symbol
Symbol: symbol
Data symbol: data symbol
GI: guard interval    SIG: signal field

▦ Symbol transmitted on a puncture transmission channel

▦ Symbol transmitted on a first channel

FIG. 9

Preamble symbol: preamble symbol
Symbol: symbol
Data symbol: data symbol
GI: guard interval
EHT-LTF: extremely high throughput long training field

Symbol transmitted on a puncture transmission channel

Symbol transmitted on a first channel

FIG. 10

FIG. 11

FIG. 12

FIG. 13

**EP 4 231 557 B1**

### Patent documents cited in the description

- US 2020037288 A1